# FASCICULE DE BREVET EUROPEEN

(11) **EP 2 408 598 B1**
(45) Date de publication et mention de la délivrance du brevet: **20.11.2013**
(21) Numéro de dépôt: 10715947.7
(22) Date de dépôt: 16.03.2010
(51) Int. Cl.: B26D 3/11, A47J 43/25, B26D 1/29, B26D 3/26, B26D 7/06

(54) **APPAREIL DE PREPARATION CULINAIRE MULTIFONCTIONS ET/OU DE DECOUPE D'ALIMENTS EN CONTINU**
MEHRFUNKTIONSGERÄT FÜR KULINARISCHE ZUBEREITUNG UND/ODER GERÄT ZUM KONTINUIERLICHEN SCHNEIDEN VON LEBENSMITTELN
MULTIFUNCTIONAL CULINARY PREPARATION APPLIANCE AND/OR APPLIANCE FOR CONTINUOUSLY CUTTING FOOD

(30) Priorité: 16.03.2009 FR 0901215
(43) Date de publication de la demande: 25.01.2012
(73) Titulaire: SEB S.A., 69130 Ecully (FR)
(72) Inventeur: ROUYER, Philippe, F-65290 Juillan (FR); GARRIGUES, Patrick, F-65260 Pierrefitte-nestalas (FR); LAFOND, Jean-Marie, F-65420 Ibos (FR); SUBERBIE, Nicolas, F-65290 Juillan (FR)
(74) Mandataire: Cémeli, Eric Philippe Laurent
(86) Numéro de dépôt international: PCT/FR2010/050472
(87) Numéro de publication internationale: WO 2010/106284

(56) Documents cités:
- WO-A-85/01240
- CH-A- 296 967
- DE-A1- 3 535 939
- DE-C1- 19 702 921
- FR-A- 1 324 653
- US-A1- 2008 245 202

## Description

La présente invention concerne le domaine technique des appareils de découpe d'aliments.

Selon un premier aspect, la présente invention concerne plus particulièrement les appareils prévus pour réaliser une découpe continue des aliments, par exemple sous forme d'hélice, ou de filaments, par opposition à la découpe séquentielle notamment sous forme de tranches, de bâtonnets, voire de dés.

Selon un deuxième aspect, la présente invention concerne plus particulièrement les appareils multifonctions comportant plusieurs outils de travail interchangeables.

Le document US 4 628 808 divulgue un appareil de découpe d'aliments comportant un outil de travail entraîné en rotation par un moteur de manière périphérique et présentant une portion axiale concave comportant un organe de coupe prévu pour la découpe en spirale. Cet organe de coupe s'étend jusqu'à l'axe de rotation de l'outil de travail et ménage un passage pour l'évacuation de l'aliment découpé au travers de l'outil de travail. Cet appareil permet d'obtenir des rubans de longueur supérieure à la longueur de l'aliment non découpé. Un inconvénient de la réalisation proposée dans ce document réside dans le maintien de l'aliment en position supérieure par un poids monté sur glissière. La portion axiale concave inférieure permet le centrage de l'aliment mais sa mise en place dans l'appareil reste fastidieuse.

Un objet de la présente invention est d'améliorer l'ergonomie d'un appareil du type précité.

Cet objet est atteint avec un appareil de découpe d'aliments comportant un bâti portant un outil de travail entraîné en rotation de manière périphérique par un moteur selon un axe, l'outil de travail présentant une portion axiale concave comportant un organe de coupe continue s'étendant jusqu'à l'axe et ménageant un passage pour l'évacuation de l'aliment découpé au travers dudit outil de travail, du fait que la portion axiale concave est agencée en regard d'un conduit prévu pour l'introduction des aliments. Ainsi la portion axiale concave assure le centrage de l'extrémité de l'aliment introduit par le conduit, et les parois internes du conduit assurent un guidage de l'aliment poussé dans le conduit. L'utilisation de l'appareil est particulièrement simple. La construction de l'appareil est également simple. Les aliments découpés peuvent être récupérés dans un réceptacle disposé sous l'outil de travail. L'appareil obtenu est particulièrement compact.

Avantageusement, le conduit appartient à un couvercle reposant sur le bâti. En alternative, le conduit pourrait notamment être ménagé dans une paroi du bâti.

Avantageusement encore, l'appareil comporte un poussoir prévu pour être engagé dans le conduit. Cette disposition permet de découper plus complètement les aliments engagés dans le conduit.

Avantageusement alors, le poussoir et le conduit présentent des moyens de guidage en translation longitudinale. Cette disposition permet d'éviter l'entraînement en rotation du poussoir dans le conduit.

Avantageusement encore, le poussoir comporte une extrémité présentant des moyens de retenue. Cette disposition permet d'éviter un entraînement en rotation de l'aliment par l'outil de travail.

Avantageusement encore, la longueur du conduit est supérieure à la largeur du conduit. Cette disposition permet un meilleur guidage des aliments dans le conduit.

Selon une forme de réalisation avantageuse, la portion axiale concave présente une géométrie de révolution.

Selon une forme de réalisation préférée, la portion axiale concave est conique.

Avantageusement encore, l'outil de travail est monté dans un porte-à-faux du bâti s'étendant à partir d'un montant du bâti.

Avantageusement alors, le moteur est logé dans le montant.

Avantageusement encore, le montant est issu d'un socle du bâti.

Avantageusement encore, l'outil de travail est monté amovible sur un porte-outil entraîné en rotation de manière périphérique par le moteur selon l'axe.

Avantageusement alors, un autre outil de travail comportant un organe de coupe séquentielle s'interrompant à distance de l'axe est susceptible d'être monté sur le porte-outil.

Avantageusement alors, le couvercle comporte un corps reposant sur le bâti et une partie mobile comprenant le conduit, ladite partie mobile étant déplaçable par rapport à l'axe entre une position axiale du conduit, dans laquelle l'axe traverse le conduit, et une position latérale du conduit, dans laquelle le conduit est écarté de la position axiale. Cette disposition permet de réaliser des découpes continues et des découpes séquentielles avec un même appareil. En alternative, l'appareil pourrait notamment comporter un premier couvercle prévu pour la découpe continue, présentant un conduit axial, et un deuxième couvercle prévu pour la découpe séquentielle, présentant un conduit latéral.

Avantageusement alors, la partie mobile du couvercle est montée rotative sur le corps du couvercle. Cette disposition permet de faciliter la manipulation de l'appareil.

Avantageusement encore, la position latérale du conduit est agencée entre le montant et la position axiale du conduit. Cette disposition permet de limiter la longueur du porte-à-faux lors de l'utilisation en découpe séquentielle.

L'invention sera mieux comprise à l'étude d'un exemple de réalisation, pris à titre nullement limitatif, illustré dans les figures annexées, dans lesquelles :
- la figure 1 est une vue en éclaté d'un exemple de réalisation d'un appareil de découpe d'aliments selon l'invention,
- la figure 2 est une vue en coupe verticale partielle du bâti de l'appareil illustré sur la figure 1,
- la figure 3 est une vue en coupe horizontale du bâti de l'appareil illustré sur la figure 1, montrant la partie inférieure du bâti, l'entraînement étant illustré de manière schématique,
- la figure 4 est une vue en éclaté du couvercle de l'appareil illustré sur la figure 1,
- les figures 5 et 6 sont deux vues d'un outil de travail de l'appareil illustré sur la figure 1,
- la figure 7 est une vue en coupe verticale partielle de l'appareil illustré sur la figure 1 avec l'outil de travail illustré sur les figures 5 et 6,
- la figure 8 est une vue schématique du fonctionnement de l'appareil dans la configuration illustrée sur la figure 7,
- la figure 9 est une vue en coupe verticale partielle de l'appareil illustré sur la figure 1 avec un autre outil de travail visible sur la figure 1.

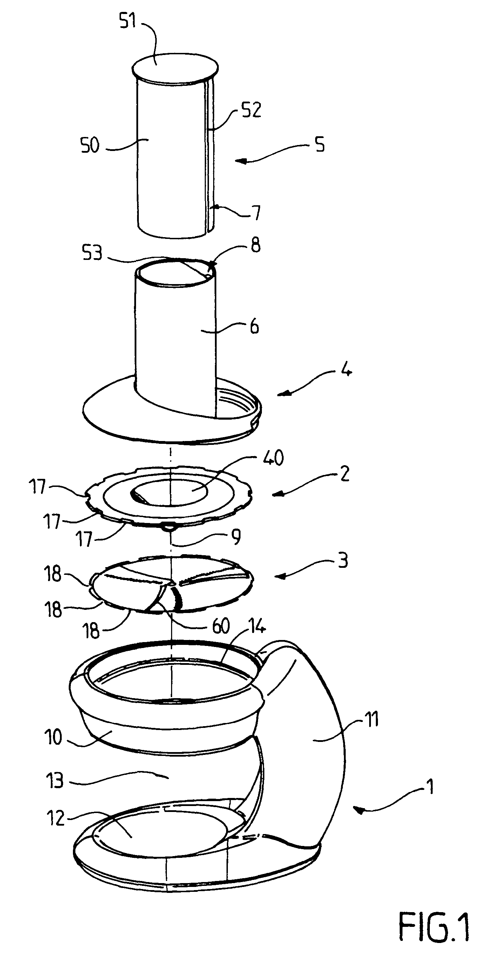

L'appareil de découpe d'aliments illustré sur la figure 1 comporte un bâti 1 prévu pour recevoir un outil de travail 2 ou un autre outil de travail 3, un couvercle 4 et un poussoir 5.

Le couvercle 4 forme un conduit 6 prévu pour l'introduction des aliments. Le poussoir 5 est prévu pour être engagé dans le conduit 6. La longueur du conduit 6 est supérieure à la largeur du conduit 6. Le poussoir 5 et le conduit 6 peuvent comporter des moyens de guidage en translation longitudinale 7, 8. Tel que représenté sur la figure 1, le conduit 6 présente une section circulaire. Le poussoir 5 présente un corps cylindrique 50 surmonté d'un chapeau 51. Les moyens de guidage en translation longitudinale 7 du poussoir 5 sont formés par une rainure longitudinale 52, et les moyens de guidage en translation longitudinale 8 du conduit 6 sont formés par une protubérance interne 53.

L'outil de travail 2 ou l'autre outil de travail 3 est entraîné en rotation de manière périphérique. L'outil de travail 2 ou l'autre outil de travail 3 est monté dans un porte-à-faux 10 du bâti 1 s'étendant à partir d'un montant 11 du bâti 1. Le montant 11 est issu d'un socle 12 du bâti 1. Le socle 12 est disposé sous le porte-à-faux 10 et ménage un espace de réception 13 pour un réceptacle (non représenté sur les figures) prévu pour recevoir les aliments découpés. Le porte-à-faux 10 forme un anneau permettant le passage des aliments découpés par l'outil de travail 2 ou l'autre outil de travail 3.

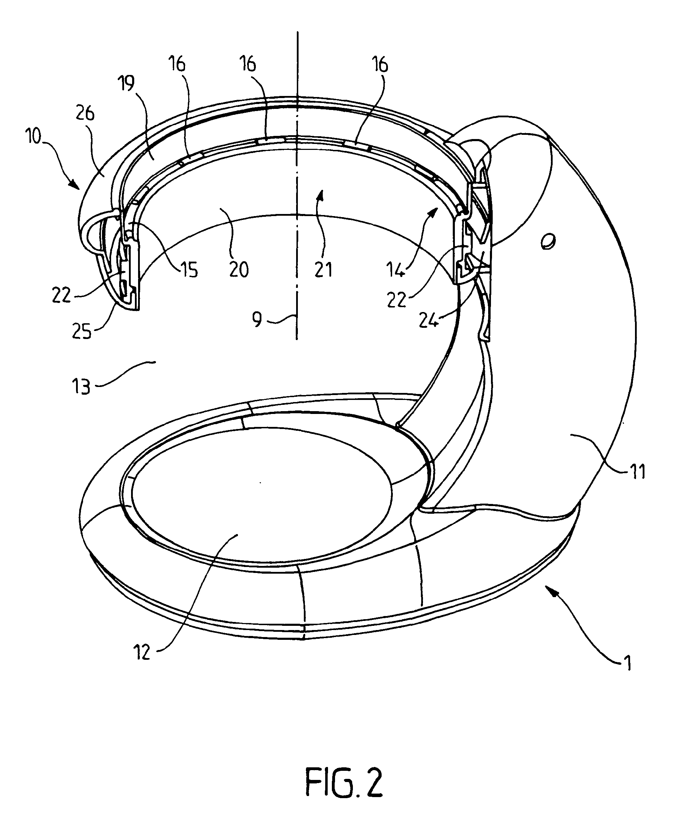

Tel que visible sur la figure 2, le porte-à-faux 10 loge un porte-outil 14 annulaire. Le porte-outil 14 présente un épaulement 15 prévu pour recevoir l'outil de travail 2 ou l'autre outil de travail 3. Le porte-outil 14 présente au moins un organe d'entraînement 16 prévu pour coopérer avec l'outil de travail 2 ou l'autre outil de travail 3. Tel que représenté sur la figure 2, les organes d'entraînement 16 sont formés par des ergots agencés sur l'épaulement 15. Tel que visible sur la figure 1, l'outil de travail 2 et l'autre outil de travail 3 présentent des découpes périphériques 17, 18 prévues pour recevoir les organes d'entraînement 16. Le porte-outil 14 présente une paroi annulaire supérieure 19 entourant l'épaulement 15. Le porte-outil 14 présente une paroi annulaire inférieure 20 s'étendant en dessous de l'épaulement 15. Le porte-outil 14 forme ainsi une chemise 21 protégeant l'intérieur du porte-à-faux 10.

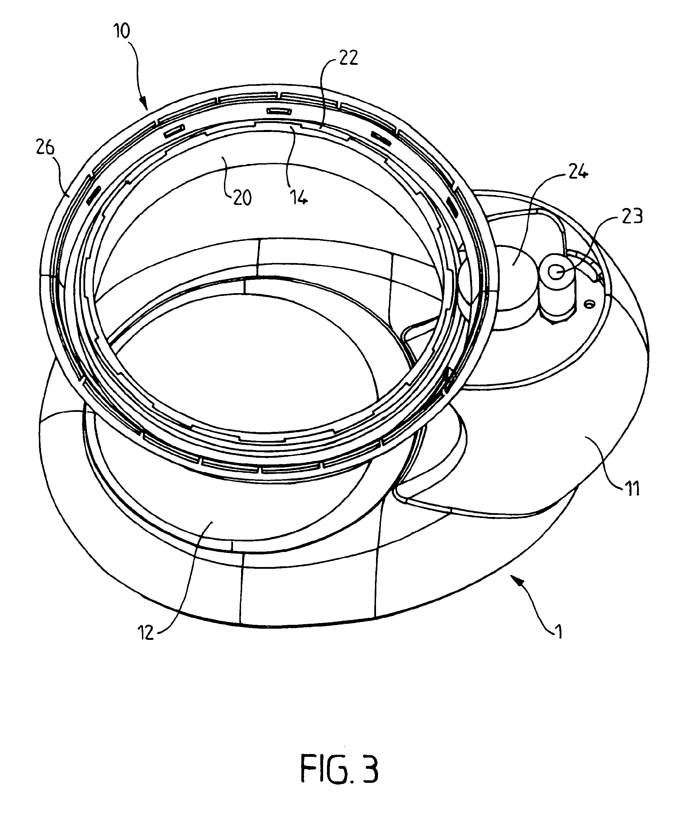

Le porte-outil 14 est monté amovible sur un entraîneur 22, mieux visible sur la figure 3. L'entraîneur 22 est relié à un moteur 23 par l'intermédiaire d'une transmission 24, représentée de manière schématique sur la figure 3. De ce fait, le moteur 23 entraîne le porte-outil 14 en rotation selon un axe 9.

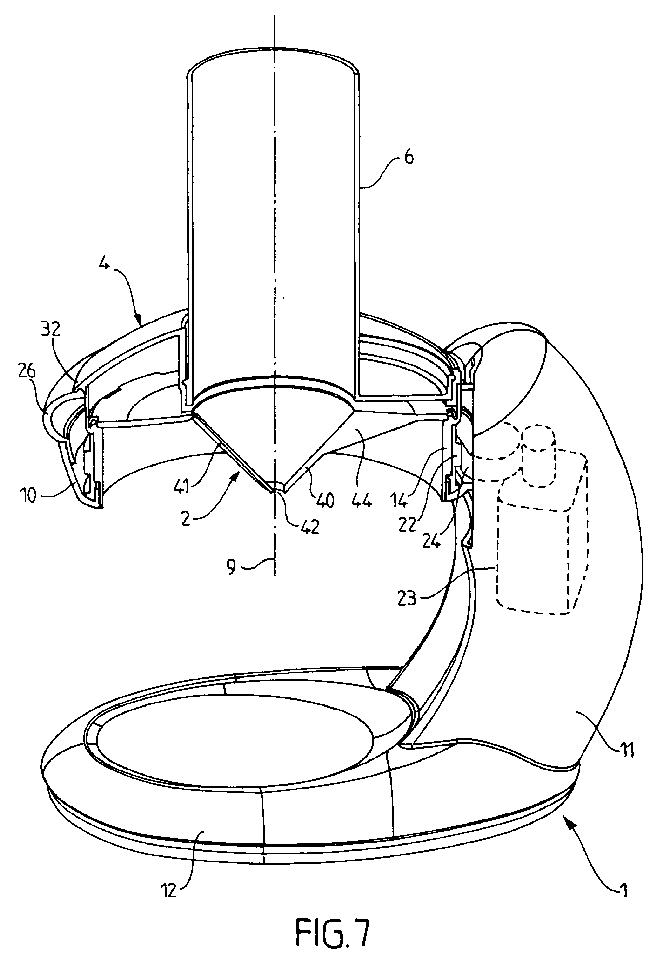

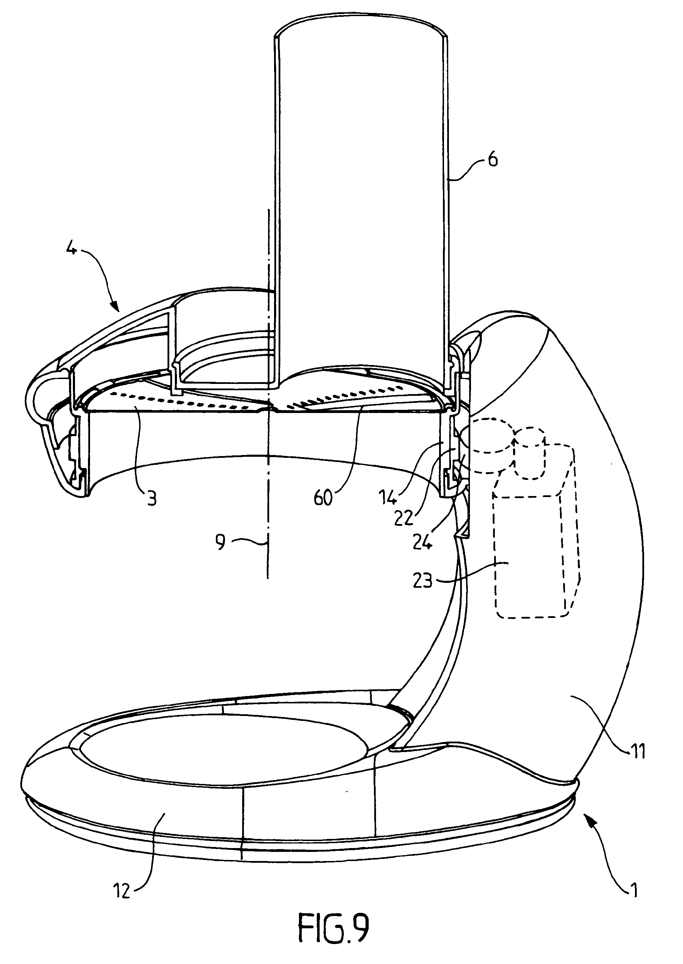

Ainsi l'outil de travail 2 et l'autre outil de travail 3 sont montés amovibles sur le porte-outil 14. L'outil de travail 2 et l'autre outil de travail 3 sont entraînés en rotation de manière périphérique par le moteur 23 selon l'axe 9, tel que montré sur les figures 7 et 9, le moteur 23 et la transmission 24 étant illustrés de manière schématique. Le moteur 23 est logé dans le montant 11.

Tel que visible sur la figure 2, le porte-outil 14 et l'entraîneur 22 sont montés sur un support 25 issu du montant 11. Un capot 26 recouvre le support 25. Le support 25 et le capot 26 sont annulaires.

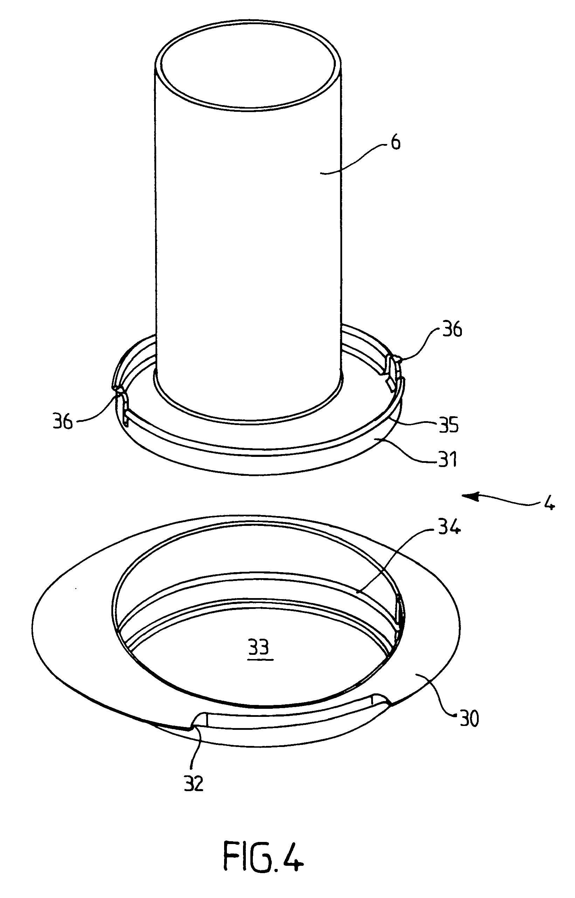

Tel que visible sur les figures 4, 7 et 9, le couvercle 4 comporte un corps 30 reposant sur le bâti 1 et une partie mobile 31 comprenant le conduit 6. La partie mobile 31 est déplaçable par rapport à l'axe 9 entre une position axiale du conduit 6 représentée sur la figure 7, dans laquelle l'axe 9 traverse le conduit 6, et une position latérale du conduit 6, représentée sur la figure 9, dans laquelle le conduit 6 est écarté de la position axiale.

Le conduit 6 appartient au couvercle 4 reposant sur le bâti 1, tel que visible sur les figures 7 et 9.

Plus particulièrement, la partie mobile 31 du couvercle 4 est montée rotative sur le corps 30 du couvercle 4. La position latérale du conduit 6 est agencée entre le montant 11 et la position axiale du conduit 6.

Le couvercle 4 comporte un rebord 32 prévu pour reposer sur le bâti 1. Le rebord 32 appartient au corps 30. Le rebord 32 repose sur le porte-à-faux 10. Le corps 30 présente une ouverture 33 prévue pour recevoir la partie mobile 31. Selon le mode de réalisation préféré illustré sur les figures, l'ouverture 33 est circulaire. Le corps 30 présente une gorge 34 prévue pour recevoir une nervure périphérique 35 de la partie mobile 31. La nervure périphérique 35 s'interrompt au niveau de deux languettes élastiques 36 prévues pour être insérées dans la gorge 34 et assurer le montage de la partie mobile 31 dans le corps 30.

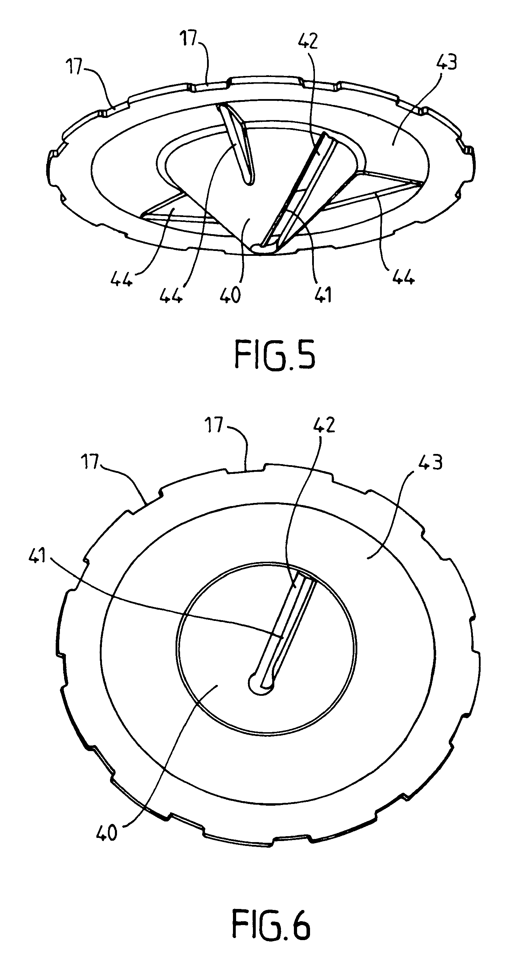

Tel que représenté sur les figures 1, 5, 6 et 7, l'outil de travail 2 présente une portion axiale concave 40 comportant un organe de coupe continue 41 s'étendant jusqu'à l'axe 9 et ménageant un passage 42 pour l'évacuation de l'aliment découpé au travers de l'outil de travail 2. La portion axiale concave 40 est agencée en regard du conduit 6 prévu pour l'introduction des aliments. Le conduit 6 est placé en position axiale.

Selon le mode de réalisation préféré illustré sur les figures 1, 5, 6 et 7, la portion axiale concave 40 présente une géométrie de révolution. Plus particulièrement, la portion axiale concave 40 est conique. L'organe de coupe continue 41 est rectiligne. La portion axiale concave 40 est entourée par une couronne 43 présentant sur son pourtour les découpes périphériques 17 prévues pour l'entraînement de l'outil de travail 2. Des parois 44 reliant la portion axiale concave 40 à la couronne 43 permettent de rigidifier l'outil de travail 2. Les parois 44 sont de préférence rectilignes et agencées radialement.

Le rayon de l'organe de coupe 41 est de préférence supérieur au rayon du conduit 6 afin d'assurer une découpe complète de l'aliment introduit dans le conduit 6.

Tel que représenté sur les figures 1 et 9, l'autre outil de travail 3 est susceptible d'être monté sur le porte-outil 14. L'autre outil de travail 3 comporte un organe de coupe séquentielle 60 s'interrompant à distance de l'axe 9. Le conduit 6 est placé en position latérale.

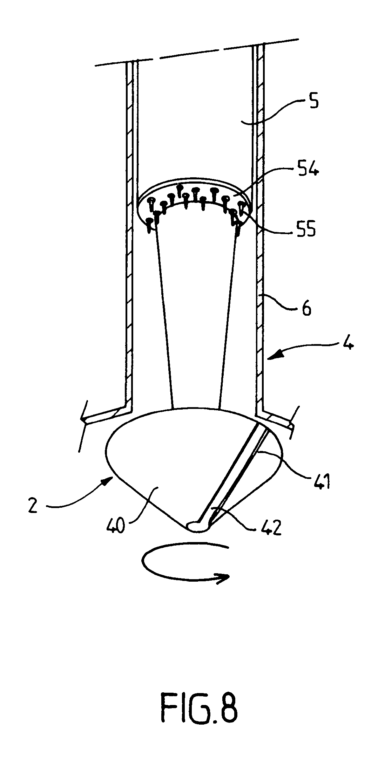

Tel que représenté sur la figure 8, le poussoir 5 comporte une extrémité 54 présentant des moyens de retenue 55. L'extrémité 54 est prévue pour être engagée dans le conduit 6. Les moyens de retenue 55 sont par exemple formés par une série de dents prévues pour venir en prise avec l'extrémité de l'aliment engagé dans le conduit 6.

L'appareil selon l'invention fonctionne et s'utilise de la manière suivante.

Pour réaliser des découpes d'aliments en continu, l'utilisateur place l'outil de travail 2 sur le porte-outil 14 et dispose le couvercle 4 avec le conduit 6 en position centrale sur le bâti 1. L'appareil présente alors la position de la figure 7. Lorsque l'utilisateur met en marche l'appareil, le moteur 23 entraîne en rotation l'outil de travail 2. La vitesse de rotation de l'outil de travail 2 est de préférence inférieure à 1000 tours/min, et avantageusement comprise entre 50 et 300 tours/min. Pour un diamètre extérieur d'environ 175 mm pour l'outil de travail 2, la vitesse de rotation de l'outil de travail 2 est par exemple comprise entre 100 et 200 tours/min. L'utilisateur place un aliment dans le conduit 6, tel que par exemple un légume ou un fruit. L'utilisateur exerce alors de préférence une poussée sur l'aliment placé contre la portion axiale concave 40 de l'outil de travail 2. L'aliment est alors découpé par l'organe de coupe continue 41, et traverse l'outil de travail 2 par le passage 42 sans rupture. Une spirale de légume ou de fruit peut ainsi être obtenue. L'utilisateur peut ensuite placer un autre aliment dans le conduit 6.

Pour réaliser des découpes séquentielles d'aliments, l'utilisateur remplace l'outil de travail 2 par l'autre outil de travail 3 et place le conduit 6 en position latérale. L'appareil présente alors la position de la figure 9.

L'appareil illustré sur les figures 1 à 9 est ainsi un appareil de préparation culinaire multifonctions.

Si désiré, l'appareil décrit peut être prévu uniquement pour la découpe en continu. L'appareil est alors dépourvu de l'autre outil de travail 3. Le couvercle 4 peut alors comporter un conduit 6 fixe par rapport au corps 30.

A titre de variante, l'appareil pourrait notamment comporter un premier couvercle prévu pour la découpe continue, présentant un conduit axial, et un deuxième couvercle prévu pour la découpe séquentielle, présentant un conduit latéral.

A titre de variante, le conduit 6 n'est pas nécessairement ménagé dans un couvercle reposant sur le bâti 1. Le conduit 6 pourrait notamment être ménagé dans une paroi du bâti 1.

Selon un autre aspect de la présente invention concernant un appareil de préparation culinaire multifonctions comportant le bâti 1 logeant le porte-outil 14 entraîné en rotation selon l'axe 9 par le moteur 23, ainsi que l'outil de travail 2 et l'autre outil de travail 3 prévus pour être montés sur le porte-outil 14, le couvercle 4 comporte le corps 30 reposant sur le bâti 1 ainsi que la partie mobile 31 comprenant un conduit 6 prévu pour l'introduction des aliments, ladite partie mobile 31 étant déplaçable par rapport à l'axe 9 entre une position axiale du conduit 6 et une position latérale du conduit 6, tel que visible notamment sur les figures 1, 2, 3, 4, 7 et 9.

L'outil de travail 2 illustré sur les figures 1, 5, 6, 7 et 8 est adapté à une introduction centrale des aliments.

L'autre outil de travail 3 illustré sur les figures 1 et 9 est adapté à une introduction latérale des aliments.

Ainsi le même couvercle 4 peut être utilisé avec l'outil de travail 2 ou avec l'autre outil de travail 3.

A titre de variante, le bâti 1 ne comporte alors pas nécessairement un porte-à-faux 10 s'étendant à partir d'un montant 11 issu d'un socle 12. Le bâti 1 peut notamment comporter un récipient de travail disposé sur une base logeant le moteur 23. Le couvercle 4 peut alors reposer sur le récipient de travail.

A titre de variante, l'outil de travail 2 utilisé avec la position axiale du conduit 6 ne comporte pas nécessairement un organe de coupe continue 41 associé à un passage pour l'évacuation des aliments. L'outil de travail 2 peut notamment être formé par un panier de centrifugeuse comportant un fond abrasif et une paroi latérale annulaire filtrante. L'appareil de découpe d'aliments multifonctions selon l'invention permet ainsi d'obtenir des jus et/ou des coulis.

A titre de variante, l'autre outil de travail 3 utilisé avec la position latérale du conduit 6 ne comporte pas nécessairement un organe de coupe séquentielle 60 s'interrompant à distance de l'axe 9. L'autre outil de travail 3 peut notamment comporter un ou plusieurs couteaux agencés à partir d'un moyeu agencé selon l'axe 9, ledit moyeu étant monté sur le porte-outil 14. L'appareil de découpe d'aliments multifonctions selon l'invention permet ainsi d'obtenir des préparations hachées et/ou mixées. L'autre outil de travail 3 peut notamment comporter une coupelle ou un fouet monté sur le porte-outil 14. L'appareil de découpe d'aliments multifonctions selon l'invention permet ainsi d'obtenir des préparations émulsionnées.

A titre de variante pour l'un ou l'autre des aspects de l'invention, la position axiale du conduit 6 peut atteindre l'axe 9, sans nécessairement être strictement centrée sur l'axe 9. En d'autres termes, l'axe 9 traverse alors le conduit 6 sans nécessairement passer au centre du conduit 6. De ce fait, le conduit 6 ne présente pas nécessairement une géométrie cylindrique.

A titre de variante pour l'un ou l'autre des aspects de l'invention, l'outil de travail 2 pourrait comporter des organes de coupe additionnels, par exemple transversaux, pour réaliser des découpes en filaments.

A titre de variante pour l'un ou l'autre des aspects de l'invention, l'outil de travail 2 peut comporter plusieurs organes de coupe continue 41 répartis depuis l'axe 9 vers la périphérie de la portion axiale concave 40.

De préférence, le ou les organes de coupe continue 41 s'étendent sur toute la hauteur de la portion axiale concave 40.

Si désiré, plusieurs types d'outil de travail 2 et/ou d'autre outil de travail 3 peuvent être prévus.

A titre de variante pour l'un ou l'autre des aspects de l'invention, le couvercle 4 peut être monté articulé sur le bâti 1.

A titre de variante pour l'un ou l'autre des aspects de l'invention, le moteur 23 n'est pas nécessairement logé dans le bâti 1.

A titre de variante pour l'un ou l'autre des aspects de l'invention, le conduit 6 n'est pas nécessairement monté mobile en rotation par rapport au corps 30 du couvercle 4.

A titre de variante pour l'un ou l'autre des aspects de l'invention, le conduit 6 n'est pas nécessairement circulaire.

La présente invention n'est nullement limitée à l'exemple de réalisation décrit, mais englobe de nombreuses modifications dans le cadre des revendications.

## Revendications

1. Appareil de découpe d'aliments comportant un bâti (1) portant un outil de travail (2) entraîné en rotation de manière périphérique par un moteur (23) selon un axe (9), l'outil de travail (2) présentant une portion axiale concave (40) comportant un organe de coupe continue (41) s'étendant jusqu'à l'axe (9) et ménageant un passage (42) pour l'évacuation de l'aliment découpé au travers dudit outil de travail (2), **caractérisé en ce que** la portion axiale concave (40) est agencée en regard d'un conduit (6) prévu pour l'introduction des aliments.

2. Appareil de découpe d'aliments selon la revendication 1, **caractérisé en ce que** le conduit (6) appartient à un couvercle (4) reposant sur le bâti (1).

3. Appareil de découpe d'aliments selon l'une des revendications 1 ou 2, **caractérisé en ce que** l'appareil comporte un poussoir (5) prévu pour être engagé dans le conduit (6).

4. Appareil de découpe d'aliments selon la revendication 3, **caractérisé en ce que** le poussoir (5) et le conduit (6) comportent des moyens de guidage en translation longitudinale (7 ; 8).

5. Appareil de découpe d'aliments selon l'une des revendications 3 ou 4, **caractérisé en ce que** le poussoir (5) comporte une extrémité (54) présentant des moyens de retenue (55).

6. Appareil de découpe d'aliments selon l'une des revendications 1 à 5, **caractérisé en ce que** la portion axiale concave (40) présente une géométrie de révolution.

7. Appareil de découpe d'aliments selon la revendication 6, **caractérisé en ce que** la portion axiale concave (40) est conique.

8. Appareil de découpe d'aliments selon l'une des revendications 1 à 7, **caractérisé en ce que** l'outil de travail (2) est monté dans un porte-à-faux (10) du bâti (1) s'étendant à partir d'un montant (11) du bâti (1).

9. Appareil de découpe d'aliments selon la revendication 8, **caractérisé en ce que** le moteur (23) est logé dans le montant (11).

10. Appareil de découpe d'aliments selon l'une des revendications 8 ou 9, **caractérisé en ce que** le montant (11) est issu d'un socle (12) du bâti (1).

11. Appareil de découpe d'aliments selon l'une des revendications 1 à 10, **caractérisé en ce que** l'outil de travail (2) est monté amovible sur un porte-outil (14) entrainé en rotation de manière périphérique par le moteur (23) selon l'axe (9).

12. Appareil de découpe d'aliments selon la revendication 11, **caractérisé en ce qu'**un autre outil de travail (3) comportant un organe de coupe séquentielle (60) s'interrompant à distance de l'axe (9) est susceptible d'être monté sur le porte-outil (14).

13. Appareil de découpe d'aliments selon la revendication 2 ou l'une des revendications 3 à 12 lorsque dépendant de la revendication 2, **caractérisé en ce que** le couvercle (4) comporte un corps (30) reposant sur le bâti (1) et une partie mobile (31) comprenant le conduit (6), ladite partie mobile (31) étant déplaçable par rapport à l'axe (9) entre une position axiale du conduit (6) et une position latérale du conduit (6).

14. Appareil de découpe d'aliments selon la revendication 13, **caractérisé en ce que** la partie mobile (31) du couvercle (4) est montée rotative sur le corps (30) du couvercle (4).

15. Appareil de découpe d'aliments selon l'une des revendications 8 à 10 et l'une des revendications 13 ou 14, **caractérisé en ce que** la position latérale du conduit (6) est agencée entre le montant (11) et la position axiale du conduit (6).

## Patentansprüche

1. Gerät zum Schneiden von Lebensmitteln, umfassend ein Gestell (1), das ein Arbeitswerkzeug (2) trägt, das von einem Motor (23) gemäß einer Achse (9) umlaufend in Drehung versetzt wird, wobei das Arbeitswerkzeug (2) einen konkaven Axialabschnitt (40) aufweist, der ein kontinuierliches Schneidorgan (41) umfasst, das sich bis zur Achse (9) erstreckt und einen Durchgang (42) zum Abführen des Schnittgutes durch das Arbeitswerkzeug (2) ausbildet, **dadurch gekennzeichnet, dass** der konkave Axialabschnitt (40) gegenüber einem Kanal (6) angeordnet ist, der zum Einführen der Lebensmittel vorgesehen ist.

2. Gerät zum Schneiden von Lebensmitteln nach Anspruch 1, **dadurch gekennzeichnet, dass** der Kanal (6) einem Deckel (4) angehört, der auf dem Gestell (1) aufliegt.

3. Gerät zum Schneiden von Lebensmitteln nach einem der Ansprüche 1 oder 2, **dadurch gekennzeichnet, dass** das Gerät einen Stopfer (5) umfasst, der vorgesehen ist, um in den Kanal (6) eingefügt zu werden.

4. Gerät zum Schneiden von Lebensmitteln nach Anspruch 3, **dadurch gekennzeichnet, dass** der Stopfer (5) und der Kanal (6) Führungsmittel zur Längsverschiebung (7; 8) umfassen.

5. Gerät zum Schneiden von Lebensmitteln nach einem der Ansprüche 3 oder 4, **dadurch gekennzeichnet, dass** der Stopfer (5) ein Ende (54) umfasst, das Rückhaltemittel (55) aufweist.

6. Gerät zum Schneiden von Lebensmitteln nach einem der Ansprüche 1 bis 5, **dadurch gekennzeichnet, dass** der konkave Axialabschnitt (40) eine Drehgeometrie aufweist.

7. Gerät zum Schneiden von Lebensmitteln nach Anspruch 6, **dadurch gekennzeichnet, dass** der konkave Axialabschnitt (40) konisch ist.

8. Gerät zum Schneiden von Lebensmitteln nach einem der Ansprüche 1 bis 7, **dadurch gekennzeichnet, dass** das Arbeitswerkzeug (2) in einem Vorsprung (10) des Gestells (1) befestigt ist, der sich ausgehend von einer Stütze (11) des Gestells (1) erstreckt.

9. Gerät zum Schneiden von Lebensmitteln nach Anspruch 8, **dadurch gekennzeichnet, dass** der Motor (23) in der Stütze (11) untergebracht ist.

10. Gerät zum Schneiden von Lebensmitteln nach einem der Ansprüche 8 oder 9, **dadurch gekennzeichnet, dass** die Stütze (11) aus einem Sockel (12) des Gestells (1) hervorgeht.

11. Gerät zum Schneiden von Lebensmitteln nach einem der Ansprüche 1 bis 10, **dadurch gekennzeichnet, dass** das Arbeitswerkzeug (2) abnehmbar auf einem Werkzeugträger (14) befestigt ist, der vom Motor (23) gemäß der Achse (9) umlaufend in Drehung versetzt wird.

12. Gerät zum Schneiden von Lebensmitteln nach Anspruch 11, **dadurch gekennzeichnet, dass** ein anderes Arbeitswerkzeug (3), das ein sequenzielles Schneidorgan (60) umfasst, das von der Achse (9) beabstandet endet, auf dem Werkzeugträger (14) befestigt werden kann.

13. Gerät zum Schneiden von Lebensmitteln nach Anspruch 2 oder einem der Ansprüche 3 bis 12, wenn abhängig von Anspruch 2, **dadurch gekennzeichnet, dass** der Deckel (4) einen Körper (30), der auf dem Gestell (1) aufliegt, und einen beweglichen Teil (31) umfasst, der den Kanal (6) umfasst, wobei der bewegliche Teil (31) in Bezug auf die Achse (9) zwischen einer Axialposition des Kanals (6) und einer seitlich versetzten Position des Kanals (6) verschiebbar ist.

14. Gerät zum Schneiden von Lebensmitteln nach Anspruch 13, **dadurch gekennzeichnet, dass** der bewegliche Teil (31) des Deckels (4) drehend auf dem Körper (30) des Deckels (4) befestigt ist.

15. Gerät zum Schneiden von Lebensmitteln nach einem der Ansprüche 8 bis 10 und einem der Ansprüche 13 oder 14, **dadurch gekennzeichnet, dass** die seitlich versetzte Position des Kanals (6) zwischen der Stütze (11) und der Axialposition des Kanals (6) angeordnet ist.

## Claims

1. A food cutting appliance comprising a frame (1) carrying a working tool (2) driven in rotation peripherally by a motor (23) along an axis (9), the working tool (2) having a concave axial portion (40) comprising a continuous cutting member (41) extending to the axis (9) and forming a passage (42) for discharging the cut food through said working tool (2), **characterised in that** the concave axial portion (40) is arranged facing a conduit (6) provided for introducing the food.

2. A food cutting appliance according to claim 1, **characterised in that** the conduit (6) belongs to a lid (4) resting on the frame (1).

3. A food cutting appliance according to one of claims 1 or 2, **characterised in that** the appliance comprises a pusher (5) provided to be engaged in the conduit (6).

4. A food cutting appliance according to claim 3, **characterised in that** the pusher (5) and the conduit (6) comprise means for guiding in longitudinal translation (7; 8).

5. A food cutting appliance according to one of claims 3 or 4, **characterised in that** the pusher (5) comprises an end (54) having retaining means (55).

6. A food cutting appliance according to one of claims 1 to 5, **characterised in that** the concave axial portion (40) has a geometry of revolution.

7. A food cutting appliance according to claim 6, **characterised in that** the concave axial portion (40) is conical.

8. A food cutting appliance according to one of claims 1 to 7, **characterised in that** the working tool (2) is mounted in an overhang (10) of the frame (1) extending from a stand (11) of the frame (1).

9. A food cutting appliance according to claim 8, **characterised in that** the motor (23) is housed inside the stand (11).

10. A food cutting appliance according to one of claims 8 or 9, **characterised in that** the stand (11) is derived from a base (12) of the frame (1).

11. A food cutting appliance according to one of claims 1 to 10, **characterised in that** the working tool (2) is removably mounted on a tool holder (14) driven in rotation peripherally by the motor (23) along the axis (9).

12. A food cutting appliance according to claim 11, **characterised in that** another working tool (3) having a sequential cutting member (60) being interrupted at a distance from the axis (9) is capable of being mounted on the tool holder (14).

13. A food cutting device according to claim 2 or one of claims 3 to 12 when dependent on claim 2, **characterised in that** the lid (4) comprises a body (30) resting on the frame (1) and a movable part (31) comprising the conduit (6), said movable part (31) being movable relative to the axis (9) between an axial position of the conduit (6) and a lateral position of the conduit (6).

14. A food cutting appliance according to claim 13, **characterised in that** the movable part (31) of the lid (4) is rotatively mounted on the body (30) of the lid (4).

15. A food cutting appliance according to one of claims 8 to 10 and one of claims 13 or 14, **characterised in that** the lateral position of the conduit (6) is arranged between the stand (11) and the axial position of the conduit (6).
